# EUROPÄISCHE PATENTANMELDUNG

(11) **EP 4 227 281 A1**
(43) Veröffentlichungstag der Anmeldung: **16.08.2023**
(21) Anmeldenummer: 22156718.3
(22) Anmeldetag: 15.02.2022
(51) Int. Cl.: C04B 28/04, C04B 7/12, C04B 7/13, C04B 20/04

(54) **KALZINIERTER TON**

(71) Anmelder: Hermann Nottenkämper GmbH & Co. KG, 46569 Hünxe (DE)
(72) Erfinder: Nottenkämper, Hans Günter, verstorben (DE)
(74) Vertreter: Weickmann, Hans

(57) **Zusammenfassung**

Die vorliegende Erfindung betrifft eine Tonzusammensetzung, ein Verfahren zu deren Kalzinierung, sowie die Verwendung der kalzinierten Tonzusammensetzung in hydraulischen Bindemitteln.

## Beschreibung

Die vorliegende Erfindung betrifft eine Tonzusammensetzung, ein Verfahren zu deren Kalzinierung, sowie die Verwendung der kalzinierten Tonzusammensetzung in hydraulischen Bindemitteln.

Zement ist ein weit verbreiteter Baustoff. Durch Zugabe von Wasser hydratisiert der Zement und härtet aus. Zusammen mit Zuschlagstoffen wie Sand und Kies wird Zement für die Herstellung von Mörtel und Beton verwendet. Zement ist weltweit eines der wichtigsten Bindemittel und mit einer Weltproduktion von etwa 5 Milliarden Tonnen einer der wichtigsten Werkstoffe.

Zur Herstellung von Zement wird Kalkstein gemahlen und anschließend auf etwa 1450 °C erhitzt (Kalzinierung). Der erhaltene Zementklinker wird zum Endprodukt Zement gemahlen. Je nach Zementsorte wird der Zement durch Zumischen von beispielsweise Hüttensand, Kalkstein, Gips etc. modifiziert.

Nicht nur der hohe Energieverbrauch bei der Kalzinierung zur Herstellung von Zement, sondern auch die Sinterreaktion 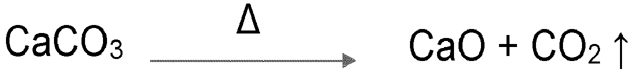 führt zu erheblichen Emissionen des Treibhausgases Kohlenstoffdioxid. Damit gehört die Zementindustrie zu den Hauptverursachern von Treibhausgasen, die für die globale Erwärmung verantwortlich gemacht werden. Allein das Freisetzen des in Kalk gebundenen Kohlenstoffdioxids während der Sinterreaktion ist verantwortlich für etwa 6-8 % des jährlichen CO₂-Ausstoßes: das ist viermal mehr als der durch den weltweiten Luftverkehr generierte CO₂-Ausstoß.

Zement und vor allem Beton sind aufgrund des günstigen Preises und der vorteilhaften mechanischen Eigenschaften bisher in der Bauindustrie alternativlos.

Aufgabe der vorliegenden Erfindung ist es daher, den Anteil an Zement in den üblichen Baustoffen, wie z.B. Beton und Mörtel, wenn schon nicht gänzlich zu ersetzen, zumindest mit umweltfreundlicheren Materialien zu substituieren, ohne dass dadurch die Eigenschaften der Baustoffe in Mitleidenschaft geraten oder von den üblichen Verarbeitungsweisen abgewichen werden muss.

Ton ist ein natürlich vorkommendes Material, welches bei hohem Wassergehalt plastisch ist und nach Trocknen spröde wird. Gebrannter Ton wird als Keramik bezeichnet und ist aufgrund mineralogisch-textureller Umwandlungen bedeutend belastbarer als getrockneter Ton und nicht mehr quellfähig. Bei den Tonmineralen handelt es sich im Allgemeinen um Gemische aus Schichtsilikaten, z.B. Illit, Montmorillonit oder Kaolinitit. Natürlicher Ton enthält zudem Beimischungen weiterer Mineralien, wie z.B. Quarz, Kalzit, Dolomit, Feldspat, Metalloxide, Kieselsäure, die nicht zu den plastischen Eigenschaften beitragen und je nach Abbaugebiet variieren.

Auch wenn Mergel als Hauptrohstoff für die Produktion von Zement, neben Kalkstein auch geringe Beimischungen von Ton enthalten kann, ist der Anteil von Ton bei der Zementherstellung so gering wie möglich zu halten, um Qualitätseinbußen zu minimieren: zum einen nimmt der Ton nicht aktiv an der Hydratisierung und damit der chemischen Härtungsreaktion teil, zum anderen bereitet die Hygroskopizität des Tons bei der Verarbeitung von Zement oder daraus hergestellten Baustoffen, wie z.B. Beton und Mörtel, Schwierigkeiten. Beim Anrühren von den Baustoffen, wird aufgrund der hohen Hygroskopizität der Tonmineralen das Zugabewasser weitestgehend adsorbiert, was zu einer unerwünschten Klümpchenbildung und inhomogener Hydratation führt. Der bei der Hydratation inerte Ton führt darüber hinaus zu Einbußen bei den mechanischen Eigenschaften, wie z.B. der Druckfestigkeit.

Überraschenderweise hat sich gezeigt, dass eine spezifische Tonzusammensetzung als Ausgangsprodukt für ein Zementsubstitut geeignet ist.

Dabei werden weder Verarbeitungsschwierigkeiten noch Einbußen der mechanischen Eigenschaften beobachtet.

Ein erster Aspekt der vorliegenden Erfindung betrifft daher eine Tonzusammensetzung umfassend
(a) SiO₂, bevorzugt in einer Menge von 65-80 Gew.-%, stärker bevorzugt 70-75 Gew.-% bezogen auf das Gesamttrockengewicht;
(b) Al₂O₃, bevorzugt in einer Menge von 7-11 Gew.-%, stärker bevorzugt 8,5-10 Gew.-% bezogen auf das Gesamttrockengewicht;
(c) Fe₂O₃, bevorzugt in einer Menge von 2-5 Gew.-%, stärker bevorzugt 3,5-4,5 Gew.-% bezogen auf das Gesamttrockengewicht;
(d) MgO, bevorzugt in einer Menge von 0,2-1,5 Gew.-%, stärker bevorzugt 1,0-1,3 Gew.-% bezogen auf das Gesamttrockengewicht; und
(e) CaO, bevorzugt in einer Menge von 1-5 Gew.-%, stärker bevorzugt 2-4 Gew.-% bezogen auf das Gesamttrockengewicht.

In einer bevorzugten Ausführungsform kann die Tonzusammensetzung ferner
(f) K₂O, bevorzugt in einer Menge von 1,5-3 Gew.-%, stärker bevorzugt in einer Menge von 2,0-2,4 Gew.-% bezogen auf das Gesamttrockengewicht und/oder
(g) TiO₂, bevorzugt in einer Menge von 0,1-1 Gew.-%, stärker bevorzugt 0,4-0,7 Gew.-% bezogen auf die Gesamttrockengewicht,
enthalten.

Die Tonzusammensetzung enthält die oben genannten Komponenten bevorzugt in einer Mischung umfassend
(i) Kaolinit, bevorzugt in einer Menge von 5-10 Gew.-%, stärker bevorzugt 6,5-8,5 Gew.-% bezogen auf das Gesamttrockengewicht.
(ii) Muskovit und/oder Illit, bevorzugt in einer Menge von 9-13 Gew.-%, stärker bevorzugt 10-13 Gew.-% bezogen auf das Gesamttrockengewicht.
(iii) Smektit und/oder Montmorillonit, bevorzugt in einer Menge von 10-20 Gew.-%, stärker bevorzugt 14-16 Gew.-% bezogen auf das Gesamttrockengewicht.
(iv) Quarz, bevorzugt in einer Menge von 40-70 Gew.-%, stärker bevorzugt 45-65 Gew.-% bezogen auf das Gesamttrockengewicht und
(v) Feldspat, bevorzugt in einer Menge von 4-7 Gew.-%, stärker bevorzugt 4,5-6,5 Gew.-% bezogen auf das Gesamttrockengewicht.

Ferner bevorzugt umfasst die Tonzusammensetzung 30-40 Gew.-%, stärker bevorzugt 33-35 Gew.-% Schichtsilikate bezogen auf die Gesamttrockenzusammensetzung.

In einem weiteren Aspekt betrifft die vorliegende Erfindung ein Verfahren zur Kalzinierung einer Tonzusammensetzung umfassend die Schritte
(A) Bereitstellen der oben beschriebenen Tonzusammensetzung,
(B) Erhitzen der in Schritt (A) erhaltenen Tonzusammensetzung bei 700-900 °C, bevorzugt bei 800-860 °C,
(C) Abkühlen der nach Schritt (B) erhaltenen Mischung an der Luft.

Die in Schritt (A) eingesetzte Tonzusammensetzung hat bevorzugt einen Wassergehalt von 15-25 Gew.-%, stärker bevorzugt von 19-24 Gew.-% bezogen auf die Gesamtzusammensetzung.

Schritt (B) erfolgt bevorzugt im Drehrohrofen, Flash Calciner, Wirbelschichtreaktor, Flugstromreaktor oder Schachtofen.

Schritt (B) dauert üblicherweise 25-.240 min, bevorzugt 40-180 min.

Bevorzugt wird Schritt (B) in Gegenwart von Luftsauerstoff durchgeführt.

Die Restfeuchte des nach Schritt (C) erhaltenen Materials liegt bei < 1 Gew.-%, stärker bevorzugt bei < 0,1 Gew.-%.

Optional umfasst das oben beschriebene Kalzinierungsverfahren einen weiteren Schritt
(D) Zerkleinern des nach Schritt (C) erhaltenen Produkts.

Schritt (D) kann mit Hilfe einer Kugelmühle oder Walzenschüsselmühle erfolgen. Das nach Schritt (D) erhaltene Produkt hat bevorzugt eine Partikelgrößenverteilung d50 von ≤ 30 µm, bevorzugt 0,001-25 µm.

Ein weiterer Aspekt der vorliegenden Erfindung bezieht sich auf die kalzinierte Tonzusammensetzung, die durch das oben beschriebene Verfahren erhalten werden kann.

Die kalzinierte Tonzusammensetzung hat bevorzugt einen Anteil an reaktiver Kieselsäure im Bereich von 12-25 Gew.-%, stärker bevorzugt im Bereich von 18-23 Gew.-%. Die Bestimmung des Anteils reaktiver Kieselsäure erfolgt nach DIN IN 196-2.

Die Mahlfeinheit der erfindungsgemäßen kalzinierten Tonzusammensetzung liegt bevorzugt im Bereich von 2000-8000 cm²/g, stärker bevorzugt im Bereich von 4000-6000 cm²/g. Die Mahlfeinheit wird nach der dem Fachmann bekannten Methode von Blaine gemessen.

Bevorzugt hat die erfindungsgemäße kalzinierte Tonzusammensetzung eine spezifische Oberfläche nach BET im Bereich von 5-10 m²/g, stärker bevorzugt im Bereich von 5-7 m²/g. Die Bestimmung der BET Oberfläche erfolgt nach DIN ISO 9277:2014-01.

Der Anteil an feinkristallinem Quarz in der erfindungsgemäßen kalzinierten Tonzusammensetzung liegt bevorzugt im Bereich von 3-9 Gew.-%, stärker bevorzugt im Bereich von 4-6 Gew.-%. Für die Bestimmung der feinkristallinen Quarzfraktion wird eine entsprechende Probe fraktioniert und getrocknet.

Anschließend erfolgt die Quantifizierung der feinkristallinen Quarzfraktion mittels Röntgenbeugungsanalyse (RBA/XRD) in der Fraktion < 10 µm.

Die kalzinierte Tonzusammensetzung hat bevorzugt eine Partikelgrößenverteilung von d50 ≤ 30 µm, stärker bevorzugt im Bereich von 0,001-25 µm, gemessen mittels ISO 13320.

Die kalzinierte Tonzusammensetzung der vorliegenden Erfindung kann in hydraulischen Bindemitteln, wie z.B. Zement, Beton und Mörtel, verwendet werden. Bevorzugt wird die erfindungsgemäße kalzinierte Tonzusammensetzung als Ersatzstoff in hydraulischen Bindemitteln eingesetzt.

Überraschenderweise hat sich gezeigt, dass die erfindungsgemäße kalzinierte Tonzusammensetzung als Substitut für hydraulische Bindemittel, insbesondere für Zement, eingesetzt werden kann.

Dabei hat sich gezeigt, dass ein Teil der Zementzusammensetzung durch die erfindungsgemäße kalzinierte Tonzusammensetzung ersetzt werden kann, ohne dass sich die Verarbeitungseigenschaften oder die mechanischen Eigenschaften des Zements nach dem Aushärten verschlechtern. Bevorzugt können etwa 10-40 Gew.-%, stärker bevorzugt 25-35 Gew.-% Zement gegen die erfindungsgemäße kalzinierte Tonzusammensetzung ersetzt werden. Gleichzeitig kann durch den Einsatz der kalzinierten Tonzusammensetzung im Vergleich zum herkömmlichen Zement ein erheblicher Anteil an Treibhausgas-Emissionen eingespart werden. Zum einen erfolgt die Kalzinierung der Tonzusammensetzung bei geringeren Temperaturen, sodass der Energieaufwand, gegenüber dem bei der Zementherstellung, reduziert ist. Zum anderen wird kein oder nur geringe Mengen Kohlenstoffdioxid beim Brennen frei.

Daher ist ein weiterer Aspekt der vorliegenden Erfindung eine Zementzusammensetzung, umfassend
(1) die erfindungsgemäße kalzinierte Tonzusammensetzung, bevorzugt in einer Menge von 10-40 Gew.-% bezogen auf die Gesamttrockenzusammensetzung und
(2) Zement, bevorzugt in einer Menge von 60-90 Gew.-% bezogen auf die Gesamttrockenzusammensetzung.

Bevorzugt wird Portlandzement, Portlandkompositzement, Hochofenzement, Puzzolanzement oder Kompositzement für die Zementzusammensetzung verwendet.

Die Zementzusammensetzung hat bevorzugt einen Wasseranspruch von 29-35 Gew.-%, stärker bevorzugt von 31-33 Gew.-% gemessen gemäß DIN EN 196.

Die Zementzusammensetzung ergibt bevorzugt ein Ausbreitmaß von 130-170 mm, stärker bevorzugt von 140-160 mm. Hierzu wird ein Normmörtel gemäß DIN EN 196-1 hergestellt (1 Teil erfindungsgemäße Zementzusammensetzung, 3 Teile CEN-Normsand und 0,5 Teile Wasser) und gemäß DIN EN 1015-3 mittels Ausbreittisch und Setztrichter bestimmt.

Die erfindungsgemäße Zementzusammensetzung hat bevorzugt einen Aktivitätsindex nach 28 Tagen von mindestens 75 % und nach 90 Tagen von mindestens 85 %, stärker bevorzugt nach 28 Tagen von mindestens 80 % und nach 90 Tagen von mindestens 90 %. Die Bestimmung des Aktivitätsindex erfolgt nach DIN EN 450-1.

Die vorliegende Erfindung wird durch das folgende Beispiel veranschaulicht, ist aber nicht darauf beschränkt.

### Beispiel 1

Die erfindungsgemäße Tonzusammensetzung aus

| | |
|---|---|
| 73 Gew.-% | SiO2 |
| 9,3 Gew.-% | Al2O3 |
| 3,9 Gew.-% | Fe2O3 |
| 1,1 Gew.-% | MgO |
| 3 Gew.-% | CaO |
| 2,1 Gew.-% | K2O |
| 0,6 Gew.-% | TiO2 |

enthält die folgenden mineralischen Bestandteile:

| | |
|---|---|
| 7,5 Gew.-% | Kaolinit |
| 11,5 Gew.-% | Illit/ Muskovit |
| 15 Gew.-% | Smektit/ Montmorrilonit |
| 55 Gew.-% | Quarz |
| 5,5 Gew.-% | Feldspat |

Die Tonzusammensetzung wird bei einer Temperatur von 830 °C in einem Drehrohrofen über 40 Minuten gebrannt.

Der erhaltene kalzinierte Ton wird mit einer Walzenschüsselmühle gemahlen. Das gemahlene Produkt hat eine Mahlfeinheit nach Blaine von 5500 cm²/g. Die Partikelgrößenverteilung hat einen Wert d50 von 20 µm.

Es wird eine erfindungsgemäße Zementzusammensetzung aus 30 Gew.-% des oben erhaltenen kalzinierten Tons und 70 Gew.-% Zement (CEM I 42,5 R) durch intensives Mischen bereitgestellt. Die Mörtelzubereitung enthält 1 Teil erfindungsgemäße Zementzusammensetzung oder Zement, 3 Teile CEN-Normsand und 0,5 Teile Wasser. In der Tabelle 1 ist der Wasseranspruch, das Mörtelausbreitmaß sowie die Druckfestigkeit der Mischung angeben und mit den Werten für den reinen Zement CEM I 42,5 R verglichen.

Die Ergebnisse zeigen, dass der Wasseranspruch - ein Indikator für die Verarbeitbarkeit der Zementzusammensetzungen - für den reinen Zement und Beispiel 1 vergleichbar ist. Dies gilt auch für das Mörtelausbreitmaß. Die Druckfestigkeit der erfindungsgemäßen Zementzusammensetzung liegt in den ersten 7 Tagen etwas hinter der des reinen Zements zurück, erreicht aber nach 28 Tagen die Druckfestigkeit der reinen Zementzusammensetzung.

### Beispiel 2 (Vergleichsbeispiel)

Eine Tonzusammensetzung aus

| | |
|---|---|
| 63,9 Gew.-% | SiO2 |
| 14,7 Gew.-% | Al2O3 |
| 5,8 Gew.-% | Fe2O3 |
| 2,5 Gew.-% | MgO |
| 1,7 Gew.-% | CaO |
| 1,6 Gew.-% | Na2O |
| 4,2 Gew.-% | K2O |
| 0,7 Gew.-% | TiO2 |

enthält die folgenden mineralischen Bestandteile:

| | |
|---|---|
| 55 Gew.-% | Illit/ Muskovit |
| 27 Gew.-% | Quarz |
| 15 Gew.-% | Feldspat |

Die Tonzusammensetzung wurde bei einer Temperatur von 950 °C in einem Drehrohrofen über 40 Minuten gebrannt und anschließend in einer Walzenschüsselmühle gemahlen.

Entsprechend Beispiel 1 wurde eine Zementzusammensetzung aus 30 Gew.-% kalzinierter Tonzusammensetzung und 70 Gew.-% Zement (CEM I 42,5 R) hergestellt und homogenisiert. Die Charakterisierung erfolgte wie in Beispiel 1 und ist in Tabelle 1 zusammengefasst. Beispiel 1 und Beispiel 2 weisen einen vergleichbaren Wasseranspruch und ein vergleichbares Mörtelausbreitmaß auf. Allerdings können Druckfestigkeiten entsprechend Beispiel 1 im gesamten Zeitraum für Beispiel 2 nicht erreicht werden, obwohl die Brenntemperatur für den illitischen Ton in Beispiel 2 um 120 °C über der der erfindungsgemäßen Tonzusammensetzung liegt. Üblicherweise wirkt sich eine höhere Brenntemperatur positiv auf die mechanischen Eigenschaften aus.

**Tabelle 1: Eigenschaften des substituierten und reinen Zements**

| | Reiner Zement 100 % Zement CEM I 42,5 R | Beispiel 1 30% Ton + 70 % Zement | Beispiel 2 30% Ton + 70 % Zement |
|---|---|---|---|
| Wasseranspruch in M.-% | 31 | 33 | 34 |
| Mörtelausbreitmaß in mm | 171 | 152 | 150 |
| Druckfestigkeit in N/mm²/ % | | | |
| 2 d | 38/100 | 25,1/66 | 24,0/63,2 |
| 7 d | 49/100 | 36,3/74 | 34,3/70 |
| 28 d | 55/100 | 51,6/93,8 | 45,4/82,5 |

Zusammenfassend kann festgestellt werden, dass sich die erfindungsgemäße Tonzusammensetzung bzw. der erfindungsgemäße kalzinierte Ton ideal als klimaschonendes Zementsubstitut erweist, ohne dass bei den mechanischen Eigenschaften und den Verarbeitungseigenschaften Abstriche gemacht werden müssen.

Die vorliegende Erfindung wird durch die vorliegenden Punkte beschrieben:
1. Tonzusammensetzung umfassend
   (a) SiO₂, bevorzugt in einer Menge von 65-80 Gew.-%, stärker bevorzugt 70-75 Gew.-% bezogen auf das Gesamttrockengewicht;
   (b) Al₂O₃, bevorzugt in einer Menge von 7-11 Gew.-%, stärker bevorzugt 8,5-10 Gew.-% bezogen auf das Gesamttrockengewicht;
   (c) Fe₂O₃, bevorzugt in einer Menge von 2-5 Gew.-%, stärker bevorzugt 3,5-4,5 Gew.-% bezogen auf das Gesamttrockengewicht;
   (d) MgO, bevorzugt in einer Menge von 0,2-1,5 Gew.-%, stärker bevorzugt 1,0-1,3 Gew.-% bezogen auf das Gesamttrockengewicht; und
   (e) CaO, bevorzugt in einer Menge von 1-5 Gew.-%, stärker bevorzugt 2-4 Gew.-% bezogen auf das Gesamttrockengewicht.
2. Tonzusammensetzung nach Punkt 1, ferner umfassend
   (f) K₂O, bevorzugt in einer Menge von 1,5-3 Gew.-%, stärker bevorzugt in einer Menge von 2,0-2,4 Gew.-% bezogen auf das Gesamttrockengewicht und/oder
   (g) TiO₂, bevorzugt in einer Menge von 0,1-1 Gew.-%, stärker bevorzugt 0,4-0,7 Gew.-% bezogen auf die Gesamttrockengewicht.
3. Tonzusammensetzung nach einem der vorhergehenden Punkte, umfassend
   (i) Kaolinit, bevorzugt in einer Menge von 5-10 Gew.-%, stärker bevorzugt 6,5-8,5 Gew.-% bezogen auf das Gesamttrockengewicht.
   (ii) Muskovit und/oder Illit, bevorzugt in einer Menge von 9-13 Gew.-%, stärker bevorzugt 10-13 Gew.-% bezogen auf das Gesamttrockengewicht.
   (iii) Smektit und/oder Montmorillonit, bevorzugt in einer Menge von 10-20 Gew.-%, stärker bevorzugt 14-16 Gew.-% bezogen auf das Gesamttrockengewicht.
   (iv) Quarz, bevorzugt in einer Menge von 40-70 Gew.-%, stärker bevorzugt 45-65 Gew.-% bezogen auf das Gesamttrockengewicht und
   (v) Feldspat, bevorzugt in einer Menge von 4-7 Gew.-%, stärker bevorzugt 4,5-6,5 Gew.-% bezogen auf das Gesamttrockengewicht.
4. Tonzusammensetzung nach einem der vorhergehenden Punkte, umfassend 30-40 Gew.-%, bevorzugt 33-35 Gew.-% Schichtsilikate bezogen auf die Gesamttrockenzusammensetzung.
5. Verfahren zur Kalzinierung einer Tonzusammensetzung umfassend die Schritte:
   (A) Bereitstellen einer Tonzusammensetzung nach einem der Punkte 1-4,
   (B) Erhitzen der in Schritt (A) erhaltenen Tonzusammensetzung bei 700-900 °C, bevorzugt 800-860 °C,
   (C)Abkühlen der nach Schritt (B) erhaltenen Mischung an der Luft.
6. Verfahren nach Punkt 5, wobei die Tonzusammensetzung in Schritt (A) eine Restfeuchte von 15-25 Gew.-%, bevorzugt 19-24 Gew.-% bezogen auf die Gesamtzusammensetzung aufweist.
7. Verfahren nach einem der Punkte 5 oder 6, wobei der Schritt (B) im Drehrohrofen, Flash Calciner, Wirbelschichtreaktor, Flugstromreaktor oder Schachtofen durchgeführt wird.
8. Kalzinierte Tonzusammensetzung erhältlich nach einem Verfahren nach einem der Punkte 5-7.
9. Kalzinierte Tonzusammensetzung nach Punkt 8, wobei der Anteil reaktiver Kieselsäure im Bereich von 12-25 Gew.-%, bevorzugt im Bereich von 18-23 Gew.-% liegt.
10. Kalzinierte Tonzusammensetzung nach Punkt 8 oder 9, wobei die Mahlfeinheit im Bereich von 2.000-8.000 cm²/g, bevorzugt im Bereich von 4.000-6.000 cm²/g liegt.
11. Kalzinierte Tonzusammensetzung nach einem der Punkte 8-10, wobei die spezifische Oberfläche nach BET im Bereich von 5- 10 m²/g, bevorzugt im Bereich von 5-7 m²/g liegt.
12. Kalzinierte Tonzusammensetzung nach einem der Punkte 8-11, wobei der Anteil an feinkristallinem Quarz im Bereich von 3-9 Gew.-%, bevorzugt im Bereich von 4-6 Gew.-%, liegt.
13. Kalzinierte Tonzusammensetzung nach einem der Punkte 8-12, wobei die Partikelgrößenverteilung d50 ≤ 30 µm, bevorzugt im Bereich von 0,001-25 µm ist.
14. Verwendung der kalzinierten Tonzusammensetzung nach einem der Punkte 8-13 in hydraulischen Bindemitteln.
15. Verwendung nach Punkt 14, wobei die hydraulischen Bindemittel Zement, Beton und Mörtel sind.
16. Verwendung nach Punkt 14 oder 15 als Ersatzstoff in hydraulischen Bindemitteln.
17. Verwendung nach einem der Punkte 14-16 als Substitut für hydraulische Bindemittel, insbesondere Zement.
18. Zementzusammensetzung, umfassend
   (1) kalzinierte Tonzusammensetzung nach einem der Punkte 8-13, bevorzugt in einer Menge von 10-40 Gew.-% bezogen auf die Gesamttrockenzusammensetzung und
   (2) Zement, bevorzugt in einer Menge von 60-90 Gew.-% bezogen auf die Gesamttrockenzusammensetzung.
19. Zementzusammensetzung nach Punkt 18, wobei der Zement bevorzugt Portlandzement, Portlandkompositzement, Hochofenzement, Puzzolanzement oder Kompositzement ist.
20. Zementzusammensetzung nach Punkt 18 oder 19, mit einem Wasseranspruch von 29-35 Gew.-% gemessen gemäß DIN EN 196.
21. Zementzusammensetzung nach einem der Punkte 18-20 mit einem Ausbreitmaß von 130-170 mm, bevorzugt 140-160 mm, gemessen gemäß DIN EN 1015-3.
22. Zementzusammensetzung nach einem der Punkte 18-21, mit einem Aktivitätsindex nach 28 Tagen von mindestens 75% und nach 90 Tagen von mindestens 85%, bevorzugt nach 28 Tagen von mindestens 80% und nach 90 Tagen von mindestens 90%, gemessen nach DIN EN 450-1.

## Patentansprüche

1. Tonzusammensetzung umfassend
(a) SiO₂, bevorzugt in einer Menge von 65-80 Gew.-%, stärker bevorzugt 70-75 Gew.-% bezogen auf das Gesamttrockengewicht;
(b) Al₂O₃, bevorzugt in einer Menge von 7-11 Gew.-%, stärker bevorzugt 8,5-10 Gew.-% bezogen auf das Gesamttrockengewicht;
(c) Fe₂O₃, bevorzugt in einer Menge von 2-5 Gew.-%, stärker bevorzugt 3,5-4,5 Gew.-% bezogen auf das Gesamttrockengewicht;
(d) MgO, bevorzugt in einer Menge von 0,2-1,5 Gew.-%, stärker bevorzugt 1,0-1,3 Gew.-% bezogen auf das Gesamttrockengewicht; und
(e) CaO, bevorzugt in einer Menge von 1-5 Gew.-%, stärker bevorzugt 2-4 Gew.-% bezogen auf das Gesamttrockengewicht.

2. Tonzusammensetzung nach Anspruch 1, ferner umfassend
(f) K₂O, bevorzugt in einer Menge von 1,5-3 Gew.-%, stärker bevorzugt in einer Menge von 2,0-2,4 Gew.-% bezogen auf das Gesamttrockengewicht und/oder
(g) TiO₂, bevorzugt in einer Menge von 0,1-1 Gew.-%, stärker bevorzugt 0,4-0,7 Gew.-% bezogen auf die Gesamttrockengewicht.

3. Tonzusammensetzung nach einem der vorhergehenden Ansprüche, umfassend
(i) Kaolinit, bevorzugt in einer Menge von 5-10 Gew.-%, stärker bevorzugt 6,5-8,5 Gew.-% bezogen auf das Gesamttrockengewicht.
(ii) Muskovit und/oder Illit, bevorzugt in einer Menge von 9-13 Gew.-%, stärker bevorzugt 10-13 Gew.-% bezogen auf das Gesamttrockengewicht.
(iii) Smektit und/oder Montmorillonit, bevorzugt in einer Menge von 10-20 Gew.-%, stärker bevorzugt 14-16 Gew.-% bezogen auf das Gesamttrockengewicht.
(iv) Quarz, bevorzugt in einer Menge von 40-70 Gew.-%, stärker bevorzugt 45-65 Gew.-% bezogen auf das Gesamttrockengewicht und
(v) Feldspat, bevorzugt in einer Menge von 4-7 Gew.-%, stärker bevorzugt 4,5-6,5 Gew.-% bezogen auf das Gesamttrockengewicht.

4. Tonzusammensetzung nach einem der vorhergehenden Ansprüche, umfassend 30-40 Gew.-%, bevorzugt 33-35 Gew.-% Schichtsilikate bezogen auf die Gesamttrockenzusammensetzung.

5. Verfahren zur Kalzinierung einer Tonzusammensetzung umfassend die Schritte:
(A) Bereitstellen einer Tonzusammensetzung nach einem der Ansprüche 1-4,
(B) Erhitzen der in Schritt (A) erhaltenen Tonzusammensetzung bei 700-900 °C, bevorzugt 800-860 °C,
(C)Abkühlen der nach Schritt (B) erhaltenen Mischung an der Luft.

6. Verfahren nach Anspruch 5, wobei der Schritt (B) im Drehrohrofen, Flash Calciner, Wirbelschichtreaktor, Flugstromreaktor oder Schachtofen durchgeführt wird.

7. Kalzinierte Tonzusammensetzung erhältlich nach einem Verfahren nach einem der Ansprüche 5-6.

8. Kalzinierte Tonzusammensetzung nach Anspruch 7, wobei der Anteil reaktiver Kieselsäure im Bereich von 12-25 Gew.-%, bevorzugt im Bereich von 18-23 Gew.-% liegt.

9. Kalzinierte Tonzusammensetzung nach einem der Ansprüche 7-8, wobei der Anteil an feinkristallinem Quarz im Bereich von 3-9 Gew.-%, bevorzugt im Bereich von 4-6 Gew.-%, liegt.

10. Kalzinierte Tonzusammensetzung nach einem der Ansprüche 7-9, wobei die Partikelgrößenverteilung d50 ≤ 30 µm, bevorzugt im Bereich von 0,001-25 µm ist.

11. Verwendung der kalzinierten Tonzusammensetzung nach einem der Ansprüche 7-10 in hydraulischen Bindemitteln, insbesondere Zement, Beton oder Mörtel.

12. Verwendung nach Anspruch 11 als Ersatzstoff in hydraulischen Bindemitteln, insbesondere als Substitut für hydraulische Bindemittel.

13. Zementzusammensetzung, umfassend
(1) kalzinierte Tonzusammensetzung nach einem der Ansprüche 7-10, bevorzugt in einer Menge von 10-40 Gew.-% bezogen auf die Gesamttrockenzusammensetzung und
(2) Zement, bevorzugt Portlandzement, Portlandkompositzement, Hochofenzement, Puzzolanzement oder Kompositzement, stärker bevorzugt in einer Menge von 60-90 Gew.-% bezogen auf die Gesamttrockenzusammensetzung.

14. Zementzusammensetzung nach Anspruch 13, mit einem Wasseranspruch von 30-36 Gew.-% gemessen gemäß DIN EN 196 und/oder mit einem Ausbreitmaß von 130-170 mm, bevorzugt 140-160 mm, gemessen gemäß DIN EN 1015-3.

15. Zementzusammensetzung nach einem der Ansprüche 13-14, mit einem Aktivitätsindex nach 28 Tagen von mindestens 75% und nach 90 Tagen von mindestens 85%, bevorzugt nach 28 Tagen von mindestens 80% und nach 90 Tagen von mindestens 90%, gemessen nach DIN EN 450-1.
